# EUROPEAN PATENT APPLICATION

(11) **EP 0 634 317 A1**
(43) Date of publication of application: **18.01.1995**
(21) Application number: 94202011.6
(22) Date of filing: 11.07.1994
(51) Int. Cl.: B62H 3/12, E04H 6/00

(54) **Device for storing bicycles**

(30) Priority: 12.07.1993 NL 9301221
(71) Applicant: Van Santbrink, Ronald Barend, NL-1398 PP Muiden (NL)
(72) Inventor: Van Santbrink, Ronald Barend, NL-1398 PP Muiden (NL)
(74) Representative: de Bruijn, Leendert C.

(57) **Abstract**

Device for storing bicycles (5) in a slanting position. This device consists of first (1) and second (2) accommodation means, one serving to accommodate the front or rear wheel, and the other serving to accommodate the other wheel. The first accommodation means are placed near a vertical boundary such as a wall (8) and are immovably connected to the ground. The second accommodation means are rotatable, so that the frame of the bicycle (5) can be moved upwards. The axis of rotation (9) of the second accommodation means (2) lies near the axis of the wheel (10) which is in the first accommodation means. A gas spring (13) is used to support the second accommodation means, in order to bear the weight of the bicycle (5) itself and said accommodation means. In the upward-moved position of the second accommodation means (2), they meet locking means (11), so that the bicycle in question can be locked in position when it has been moved upwards.

## Description

The present invention relates to a device for storing a bicycle in a considerably slanting position, comprising first and second accommodation means for the accommodation of the front and rear wheels of the bicycle, and means for tilting at least one of said accommodation means. Such a device is generally known in the prior art. Various authorities are increasingly promoting travel by bicycle, in order to avoid traffic jams and environmental problems as far as possible. On the other hand, there is the problem that bicycles are becoming increasingly prey to theft and/or vandalism. For the more expensive bicycle, placing it in a bicycle rack with a simple lock has long since become an inadequate way of ensuring that it will not be stolen. The bicycle is often removed leaving the wheel behind, or the lock is picked.

A solution has been found to this problem by providing lock-ups, in the case of which one bicycle can be placed in each lock-up. By paying a certain sum, the user can obtain the key or code to the lock-up in question and is the only person who has access to that lock-up through a door. It is relatively difficult to vandalize such a lock-up, so that the bicycle in it will be stored safely. Although such a structure is extremely satisfactory from the point of view of safety, the drawback is that such structures take up a relatively large amount of space. One of the reasons for promoting travel by bicycle was that bicycles do not take up much space, so that this solution is found to be ultimately not very effective. Besides, such structures are quite expensive, and such storage lock-ups have the problem of being difficult to clean.

It is the object of the present invention to provide a device by means of which it is possible in a simple manner to store a bicycle securely and safely, while little space is required.

This object is achieved in the case of a device of the type described above through the fact that near the first accommodation means there is an essentially vertical boundary which prevents the bicycle from being moved past the first accommodation means, and that the second accommodation means are made tiltable, their axis of rotation being disposed in such a way that it corresponds essentially to the axis of the wheel which is in the first accommodation means, and in the movement path of the second accommodation means locking means are fitted high up, for engaging in a locking manner with the second accommodation means.

The invention is based on the idea of providing a front and rear boundary for the bicycle, as in the case of the lock-ups described above, but in this case the bicycles are placed next to each other and no partitions are present. The fact that the second accommodation means are moved upwards and then locked and possibly shut off makes it impossible to remove the bicycle without destroying the entire structure of the device. Rotation of of the second accommodation means about the front or rear wheel makes the upward movement relatively simple to carry out, and the wheel in the first accommodation means does not move. Taking the bicycle up in the second accommodation means can be further facilitated by the presence of pretensioning means such as a gas spring. The presence of a boundary in line with the first accommodation means makes it impossible to remove the bicycle in the "forward" direction. With the device according to the present invention, it is possible in a simple manner to provide an assembly consisting of various devices of the type described above. In other words, for a large number of bicycles the same devices as those mentioned here can always be placed next to one another in a space-saving manner. In this case the locking means are preferably provided on a common support, and said support is provided with lateral boundary means which are designed so that they extend downwards.

The invention will be explained below with reference to an exemplary embodiment illustrated in the drawing, in which:
Fig. 1 shows diagrammatically a side view of a preferred embodiment of the device according to the invention;
Fig. 2 shows a perspective view of an assembly consisting of various devices according to the present invention.

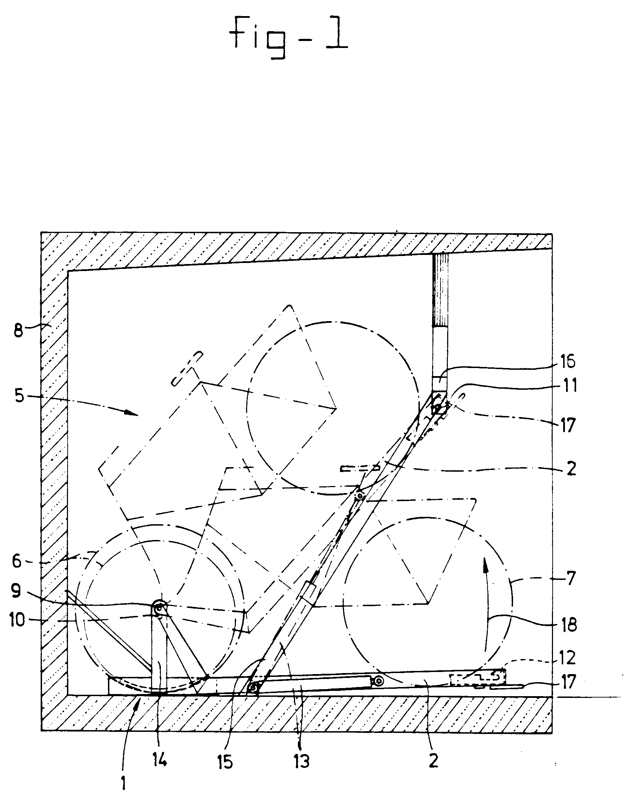

Fig. 1 shows the device according to the invention. It consists of first accommodation means 1 and second accommodation means 2. The first accommodation means 1 consist of a channel part situated on the ground, a forward-slanting U-shaped accommodation part for the wheel 6 (two sizes are shown) of the bicycle 5, and a carrier 14 extending towards the centre of the imaginary circle formed by the channel part and the U-shaped part. This centre, which is indicated by 9, corresponds essentially to the axis of the wheel 6 of the bicycle. In this case a compromise is, of course, made between 26'' and 28'' wheels, so that point 9 does not correspond exactly to the axis of the wheel in question. The second accommodation means 2 are in the form of a channel which is such that it pivots about centre of rotation 9. Connected to these two accommodation means is a gas spring 13, which at the other side is connected to the bottom of the structure. The second accommodation means are provided with locking lips 12 at the free end.

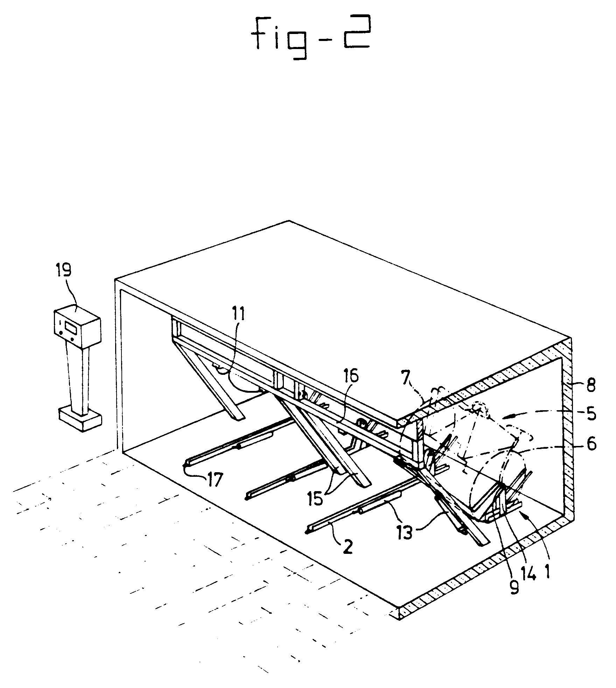

Fig. 1 shows two different positions of the second accommodation means 2, with the corresponding positions of the bicycle. In the first, horizontal position, the bicycle is simply ridden into the first and second accommodation means. Through the engagement of the bracket 17, the second accommodation means are then moved upwards as indicated by arrow 18, in the course of which the weight of the second accommodation means 2 and of the bicycle is partially compensated for by the force exerted by the gas spring 13. On further movement upwards, locking lip 12 reaches locking pin 11, and they engage with each other. As can be seen from Fig. 2, said locking pin 11 is fixed to a support 16, which is in turn connected by way of boundary bars 15 to the bottom of the structure. In the locked position, i.e. the position in which the bicycle has been moved upwards and in which locking lip 12 engages with locking pin 11, the locking arrangement is provided with a shut-off mechanism, either by means of a conventional key-operated lock or by means of an electronic locking mechanism. In the latter case, a pay unit 19 is present for this purpose, and locking and unlocking can be carried out through operation by means of cards, money or the like. As can be seen from Fig. 2, it is possible to fit various devices of the type described above next to each other in a space-saving manner. The width of each device is determined by the width of the bicycles concerned, and it is, of course, possible to place the bicycles alternately, i.e. a first bicycle with the handlebars facing boundary 8, while a second bicycle is placed with the rear wheel facing said boundary. Due to the fact that the bicycles are confined, unauthorized removal of the bicycle is out of the question. Moreover, the closing forces of the various parts of the device are guided solely through the device itself, and not through one or more parts of the bicycle. The respective parts of the device can be made relatively heavy, but this has no effect whatsoever on the ease of handling of the bicycle.

Although the invention has been discussed above with reference to a preferred embodiment, it is possible to make numerous modifications thereto, without going beyond the scope of the present invention, as it is described in the appended claims. For example, instead of a gas spring, it is possible to use other pretensioning means, which may be connected to the top side of the device by way of a cable construction if desired. It is also possible to provide guide means for the second accommodation means.

## Claims

1. Device for storing a bicycle (5) in a considerably slanting position, comprising first (1) and second (2) accommodation means for the accommodation of the front and rear wheels of the bicycle, and means for tilting at least one (2) of said accommodation means, characterized in that near the first accommodation means there is an essentially vertical boundary (8) which prevents the bicycle from being moved past the first accommodation means (1), in that the second accommodation means (2) are made tiltable, their axis of rotation (9) being disposed in such a way that it corresponds essentially to the axis (10) of the wheel which is in the first accommodation means (1), and in the movement path of the second accommodation means (2) locking means (11) are fitted high up, for engaging in a locking manner with the second accommodation means.

2. Device according to Claim 1, in which pre-tensioning means (13) which act upon on the second accommodation means are present.

3. Device according to Claim 2, in which the pre-tensioning means comprise a gas spring.

4. Device according to one of the preceding claims, in which the first accommodation means comprise a curved section provided with a carrier (14) which extends towards the centre of the curve, and to which the second accommodation means are hingedly connected.

5. Assembly for storing various bicycles, comprising various devices according to one of the preceding claims disposed next to one another, in which the locking means are placed on a common support (16) and said support (16) is provided with lateral boundary means (18).
